# EUROPÄISCHE PATENTSCHRIFT

(11) **EP 3 224 059 B1**
(45) Veröffentlichungstag und Bekanntmachung des Hinweises auf die Patenterteilung: **23.10.2019**
(21) Anmeldenummer: 15747817.3
(22) Anmeldetag: 10.08.2015
(51) Int. Cl.: B60C 11/03, B60C 11/04

(54) **FAHRZEUGLUFTREIFEN**
VEHICLE TIRES
PNEUMATIQUE DE VÉHICULE

(30) Priorität: 25.11.2014 DE 102014224032
(43) Veröffentlichungstag der Anmeldung: 04.10.2017
(73) Patentinhaber: Continental Reifen Deutschland GmbH, 30165 Hannover (DE)
(72) Erfinder: RITTWEGER, Stefan, 30826 Garbsen (DE); BAPTISTA, Diogo, 30159 Hannover (DE); MAGALHAES RISCHBIETER, Ana Maria, 30826 Garbsen (DE); LORCHHEIM, Andrea, 30823 Garbsen (DE)
(74) Vertreter: Finger, Karsten
(86) Internationale Anmeldenummer: PCT/EP2015/068328
(87) Internationale Veröffentlichungsnummer: WO 2016/082947

(56) Entgegenhaltungen:
- EP-A1- 2 636 544
- EP-A2- 2 450 199
- WO-A1-2014/056651
- WO-A1-2015/003827

## Beschreibung

Die Erfindung betrifft einen Fahrzeugluftreifen mit einem profilierten Laufstreifen mit durch Umfangsrillen von einander beabstandeten radial erhabenen Profilbändern, welche nach radial außen von einer die Straßenkontaktfläche bildenden radial äußeren Oberfläche begrenzt werden, wobei in wenigstens einem Profilband der in axialer Richtung gemessenen Profilbandbreite B quer oder schräg verlaufend angeordnete Rillen mit einer in axialer Richtung A gemessenen Erstreckungslänge L und mit einer Rillentiefe T ausgebildet sind, wobei die Rillen in einem axialen Erstreckungsabschnitt der Länge a verdickt mit einer in der radial äußeren Oberfläche gemessenen Rillenbreite b₁ und außerhalb dieses Erstreckungsabschnitts mit einer Rillenbreite b mit b₁ > b ausgebildet sind.

Derartige Fahrzeugluftreifen sind bekannt. Dabei ist es wünschenswert zur Erzielung guter Nässeeigenschaften quer oder schräg verlaufende Querrillen in Profilrippen oder auch in Profilblockreihen auszubilden, um eine optimale Entwässerung zu ermöglichen. Hierdurch wird jedoch die Biegesteifigkeit des durch die Umfangsrippe bzw. durch die Profilblockreihe gebildeten Profilbandes reduziert, wodurch Trockeneigenschaften wie Bremsen, Traktion oder Handlingeigenschaften negativ beeinträchtigt werden können.

Zur Erzielung optimaler Trockeneigenschaften ist es daher wünschenswert, soweit quer verlaufende Rillen zum Einsatz kommen, diese möglichst mit möglichst geringer Tiefe, mit möglichst kleiner Breite und mit möglichst kurzer Länge auszubilden, so dass die Steifigkeit nur begrenzt reduziert wird. Dies ermöglicht zwar eine Verbesserung der Trockeneigenschaften, allerdings unter Reduktion der Entwässerungsfähigkeit. Beispielsweise aus der GB 2 343 159 A ist es bekannt, schräg verlaufende Rillen an ihrem Erstreckungsende verdickt mit größerer Rillenbreite auszubilden. Die Ausbildung mit der Verdickung ermöglicht zwar eine verbesserte Wasseraufnahme. Diese Möglichkeit ist jedoch noch begrenzt, da mit Zunahme des Maßes der Verdickung zwar die Wasseraufnahme erhöht, aber durch die mit Rillentiefe ausgebildete Verdickung die Steifigkeit eines Profilbandes wieder reduziert wird, wodurch die Trockeneigenschaften beeinträchtigt werden können. Hierdurch ist das Maß der Verdickung und somit der Wasseraufnahme ohne negativen Einfluss auf die Trockeneigenschaften stark beschränkt.

EP 2 450 199 A2, WO 2014/056651 A1 und EP 2636544 A1 A1 offenbaren Reifen mit Oberflächenkanälen, die in verdickten Abschnitten von Querrillen münden. WO2015/003827 A1 wurde nach dem Prioritätsdatum der vorliegenden Anmeldung veröffentlicht und zeigt nicht, dass die Erstreckungslänge des Oberflächenkanals wie beansprucht begrenzt ist.

Der Erfindung liegt die Aufgabe zugrunde, bei derartigen Fahrzeugluftreifen trotz guten Trockeneigenschaften und gutem Geräuschverhalten einen schnelleren Griffkontakt auch auf nassen Oberflächen zu ermöglichen.

Die Aufgabe wird erfindungsgemäß durch die Ausbildung eines Fahrzeugluftreifens mit einem profilierten Laufstreifen mit durch Umfangsrillen von einander beabstandeten radial erhabenen Profilbändern, welche nach radial außen von einer die Straßenkontaktfläche bildenden radial äußeren Oberfläche begrenzt werden, wobei in wenigstens einem Profilband der in axialer Richtung gemessenen Profilbandbreite B quer oder schräg verlaufend angeordnete Rillen mit einer in axialer Richtung A gemessenen Erstreckungslänge L und mit einer Rillentiefe T ausgebildet sind, wobei die Rillen in einem axialen Erstreckungsabschnitt der Länge a verdickt mit einer in der radial äußeren Oberfläche gemessenen Rillenbreite b₁ und außerhalb dieses Erstreckungsabschnitts mit einer Rillenbreite b mit b₁ > b ausgebildet sind, gemäß den Merkmalen von Anspruch 1 gelöst, bei dem die Länge a mit 2,0mm≤a≤(0,25*L) ausgebildet ist und bei dem zumindest ein in der radial äußeren Oberfläche des Profilbandes in Umfangsrichtung U des Reifens erstreckter Oberflächenkanal mit einer Erstreckungslänge e, mit einer längs seiner Erstreckung ausgebildeten Tiefe t₂ mit 0,5mm≤ t₂ ≤ 2,5mm und mit einer Breite b₂ mit b₂≤a und mit b₂≤2,5mm ausgebildet ist, der in den verdickten Erstreckungsabschnitt der Rille mündet,
**wobei die Erstreckungslänge e des Oberflächenkanals mit (b/2)≤e≤(4b) ausgebildet ist.**

Durch diese Ausbildung wird ermöglicht, dass im Profilband durch die Verdickung und den in Umfangsrichtung in die Verdickung einmündenden Entwässerungskanal die schnelle Wasserableitung in die Querrille sicher gestellt und die Entwässerung im Bereich des Profilbandes verbessert werden kann. Die Ausbildung der Entwässerung mit Hilfe des fein ausgebildeten Oberflächenkanals ermöglicht dabei die schnelle Entwässerung ohne zusätzlich die Steifigkeit des Profilbandes zu beeinträchtigen. Hierdurch kann trotz Sicherstellung einer hohen Steifigkeit des Profilbandes und somit trotz guter Trockeneigenschaften eine verbesserte Entwässerung aus dem Profilband ermöglicht werden. **Durch die Ausbildung der Erstreckungslänge e kann ein optimaler Kompromiss aus Funktion der Entwässerung und genutztem Volumen ermöglicht werden.**

Besonders vorteilhaft ist die Ausbildung eines Fahrzeugreifens gemäß den Merkmalen von Anspruch 2, wobei die Erstreckungslänge L mit (1/3)B ≤L≤B ausgebildet ist.

Besonders vorteilhaft ist die Ausbildung eines Fahrzeugreifens gemäß den Merkmalen von Anspruch 3, wobei die Breite b₂ mit 1mm≤b₂ ausgebildet ist. Hierdurch kann in einfacher Weise eine besonders wirksame Entwässerung sicher umgesetzt werden.

Besonders vorteilhaft ist die Ausbildung eines Fahrzeugreifens gemäß den Merkmalen von Anspruch **4,** wobei die Rillenbreite b mit 3mm≤b≤6mm ausgebildet ist. Hierdurch wird eine besonders vorteilhafte Umsetzung gerade für PKW-Reifen begünstigt.

Besonders vorteilhaft ist die Ausbildung eines Fahrzeugreifens gemäß den Merkmalen von Anspruch **5,** wobei die Rillenbreite b₁ mit (6/5)b≤b₁≤2b ausgebildet ist. Hierdurch kann eine gute Wasseraufnahme weiter begünstigt werden.

Besonders vorteilhaft ist die Ausbildung eines Fahrzeugreifens gemäß den Merkmalen von Anspruch **6,** wobei die Rillentiefe T mit 5mm≤T≤P_{T} ausgebildet ist, wobei die maximale Profiltiefe P_{T} ist. Hierdurch wird eine besonders vorteilhafte Umsetzung gerade für PKW-Reifen begünstigt.

Besonders vorteilhaft ist die Ausbildung eines Fahrzeugreifens gemäß den Merkmalen von Anspruch 7, wobei die Rille längs der axialen Erstreckungsabschnitt der Verdickung der Länge a mit einer Tiefe T₁ ausgebildet ist mit (T/2)≤ T₁≤(0,75T). Hierdurch kann zusätzlich eine Vergleichmäßigung der Steifigkeit des Profilbandes ermöglicht werden.

Besonders vorteilhaft ist die Ausbildung eines Fahrzeugreifens gemäß den Merkmalen von Anspruch **8,** wobei der axiale Erstreckungsabschnitt der Verdickung der Länge a an einem Erstreckungsende der Rille ausgebildet ist. Dies begünstigt die Umsetzung kurzer Fließwege des Wassers in die quer- bzw. schrägverlaufende Rille.

Besonders vorteilhaft ist die Ausbildung eines Fahrzeugreifens gemäß den Merkmalen von Anspruch 9, wobei der axiale Erstreckungsabschnitt der Verdickung der Länge a im mittleren Erstreckungsdrittel der Rille ausgebildet ist. Dies begünstigt die Umsetzung kurzer Fließwege des Wassers zur nächsten Umfangsrille insbesondere bei quer oder schrägverlaufenden Rillen, die sich in axialer Richtung A durch ein ganzes Profilband hindurch erstrecken.

Die Erfindung wird im Folgenden an Hand der in den Figuren 1 bis 9 dargestellten Ausführungsbeispiele näher erläutert. Hierin zeigen
- Fig.1: einen Umfangsabschnitt eines Fahrzeugluftreifens für Personenkraftwagen (Pkw) in Draufsicht,
- Fig.2: einen vergrößerten Abschnitt des Laufstreifenprofils von Fig.1 in Draufsicht,
- Fig.3: das Laufstreifenprofil von Fig.2 in Querschnittdarstellung gemäß Schnitt III-III von Fig.2,
- Fig.4: das Laufstreifenprofil von Fig.3 in Querschnittdarstellung gemäß Schnitt IV-IV von Fig.2,
- Fig.5: das Laufstreifenprofil von Fig.2 in Schnittdarstellung gemäß Schnitt V-V, wobei in dieser Schnittdarstellung zur besseren Überschaubarkeit nur der Schnittkonturverlauf in der Schnittebene dargestellt ist,
- Fig.6: das Laufstreifenprofil von Fig.1 in alternativer Ausführung in einer Darstellung analog zur Darstellung von Fig.2,
- Fig.7: das Laufstreifenprofil von Fig.6 in Schnittdarstellung gemäß Schnitt VII-VII von Fig.6,
- Fig.8: das Laufstreifenprofil von Fig.6 in Schnittdarstellung gemäß Schnitt VIII-VIII von Fig.6 und
- Fig.9: das Laufstreifenprofil von Fig.6 in Schnittdarstellung gemäß Schnitt IX-IX von Fig.6, wobei zur besseren Überschaubarkeit lediglich der Schnittkonturverlauf in der Schnittebene dargestellt ist.

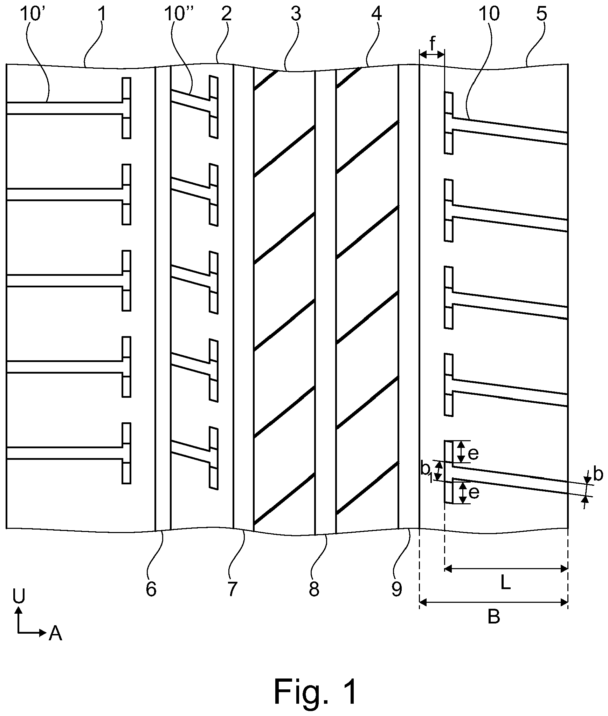

Fig. 1 zeigt ein Laufstreifenprofil eines Fahrzeugluftreifens für Personenkraftwagen (Pkw), bei welchem in bekannter Weise über den Umfang des Fahrzeugluftreifens erstreckte und in Umfangsrichtung U ausgerichtete Profilbänder 1, 2, 3,4 und 5 in axialer Richtung A des Fahrzeugluftreifens nebeneinander angeordnet sind. Das Profilband 1 ist dabei das in Fig.1 auf der linken Seite dargestellte Schulterprofilband, das Profilband 5 ist das in Fig.1 auf der rechten Seite dargestellte Schulterprofilband. Die Profilbänder 1 und 2 sind dabei in bekannter Weise durch eine über den Umfang des Fahrzeugluftreifens erstreckte und in Umfangsrichtung U ausgerichtete Umfangsrille 6 in axialer Richtung A voneinander beabstandet. Die Profilbänder 2 und 3 sind in bekannter Weise durch eine über den gesamten Umfang des Fahrzeugluftreifens erstreckte und in Umfangsrichtung U ausgerichtete Umfangsrille 7 bekannter Art in axialer Richtung A voneinander beabstandet. Die Profilbänder 3 und 4 sind in bekannter Weise durch eine über den gesamten Umfang des Fahrzeugluftreifens erstreckte und in Umfangsrichtung U ausgerichtete Umfangsrille 8 in axialer Richtung A voneinander beabstandet. Die Profilbänder 4 und 5 sind in bekannter Weise durch eine über den gesamten Umfang des Fahrzeugluftreifens erstreckte und in Umfangsrichtung U des Fahrzeugluftreifens ausgerichtete Umfangsrille 9 in axialer Richtung A voneinander beabstandet.

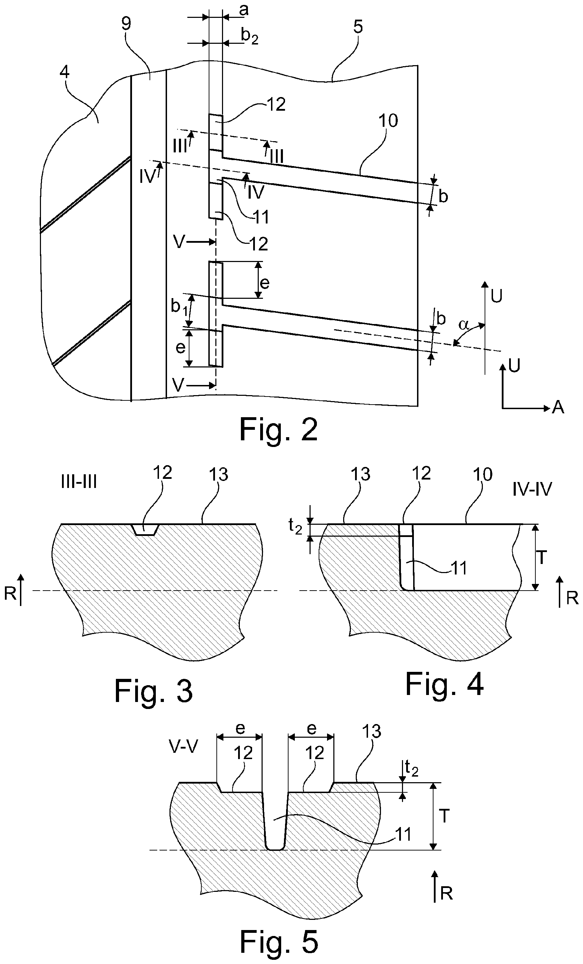

Die Profilbänder 1, 2, 3, 4 und 5 sind - wie beispielsweise anhand des Profilbandes 5 in den Figuren 3, 4 und 5 dargestellt ist - in radialer Richtung R des Fahrzeugluftreifens nach außen hin durch eine die Mantelfläche des Profils bildende radial äußere Oberfläche 13, welche auch die Bodenkontaktoberfläche des Reifens bildet, begrenzt.

Im dargestellten Ausführungsbeispiel der Figuren 1 und 2 sind die Profilbänder 1, 2, 3, 4 und 5 - wie an Hand der Profilbänder 4 und 5 in den Figuren 2 bis 5 dargestellt ist - über den gesamten Umfang des Fahrzeugluftreifens erstreckte Profilrippen.

Die Figuren 1 und 2 zeigen dabei lediglich denjenigen axialen Erstreckungsabschnitt des Laufstreifenprofiles, welcher im axialen Erstreckungsabschnitt der Bodenaufstandsfläche des Fahrzeugluftreifens im unbelasteten Normzustand des Reifens ausgebildet ist.

Das Profilband 5 ist im axialen Erstreckungsbereich der Bodenaufstandsbreite mit einer in axialer Richtung A in der radial äußeren Oberfläche 13 gemessenen Breite B ausgebildet.

In der Profilrippe 5 sind über den Umfang des Fahrzeugluftreifens verteilt in bekannter Weise quer verlaufende Rillen 10 ausgebildet, welche sich innerhalb der Bodenaufstandsbreite über eine in axialer Richtung A des Fahrzeugluftreifens erstreckte Erstreckungslänge L erstrecken und im in axialer Richtung A gemessenen Abstand f von der Umfangsrille 9 enden. Die Erstreckungslänge L ist dabei mit L = (B-f) ausgebildet. Die Rille 10 erstreckt sich jeweils geradlinig unter Einschluss eines Neigungswinkels α zur Umfangsrichtung U des Fahrzeugluftreifens mit 45° ≤ α≤ 135°. Im dargestellten Ausführungsbeispiel ist α = 80° gewählt.

Die Länge L ist mit (1/3)B ≤ L ≤ B ausgebildet. Im dargestellten Ausführungsbeispiel ist L = (0,8 B) und der Abstand f ist mit f = (0,2 B) gewählt.

Die Rille 10 ist jeweils längs ihrer gesamten Erstreckung mit einer ausgehend von der radial äußeren Oberfläche 13 in radialer Richtung nach innen hin gemessenen Tiefe T ausgebildet, welche mit 5mm ≤ T ≤ P_{T} ausgebildet ist. Dabei ist P_{T} die Profiltiefe. Im dargestellten Ausführungsbeispiel ist T = P_{T} gewählt.

An ihrem in axialer Richtung A zur Umfangsrille 9 hin weisenden Erstreckungsende ist die Rille 10 jeweils in einem Erstreckungsabschnitt 11 der in axialer Richtung A gemessenen Erstreckungslänge a mit einer in der radial äußeren Oberfläche 13 senkrecht zur Haupterstreckungsrichtung der Rille 10 gemessenen Erstreckungsbreite b₁ ausgebildet. Außerhalb des axialen Erstreckungsabschnittes 11 und somit über die gesamte axiale Erstreckung der Rille 10 mit Ausnahme des Erstreckungsabschnitts 11 ist die Rille 10 mit der in der radial äußeren Oberfläche 13 senkrecht zur Haupterstreckungsrichtung der Rille 10 gemessenen Breite b ausgebildet, wobei b₁ mit (6/5)b ≤ b₁ ≤ 2b gewählt ist. Im dargestellten Ausführungsbeispiel ist b₁ = 1,5 b.

Die Breite b ist mit 3mm ≤ b ≤ 6mm gewählt. Beispielsweise ist b = 5mm.

In der radial äußeren Oberfläche 13 des Profilbandes 5 ist in Umfangsrichtung U des Fahrzeugluftreifens gesehen beiderseits des Erstreckungsabschnitts 11 einer Rille 10 jeweils ein in Umfangsrichtung U des Fahrzeugluftreifens ausgerichteter Oberflächenkanal 12 ausgebildet, welcher sich jeweils in Umfangsrichtung U über eine Erstreckungslänge e mit einer längs seiner Erstreckung ausgebildeten Erstreckungsbreite b₂ und einer Erstreckungstiefe t₂ erstreckt und im Erstreckungsabschnitt 11 in die Rille 10 mündet. Die Erstreckungslänge e ist dabei mit (b/2) ≤ e ≤ (4b) ausgebildet. Die Breite b₂ ist mit b₂ ≤ a ausgebildet. Die Breite b₂ ist dabei mit 1mm ≤ b₂ ≤ 2,5mm ausgebildet. Die Tiefe t₂ ist mit 0,5 mm ≤ t₂ ≤ 2,5mm gewählt ausgebildet. Beispielsweise ist - wie in Fig. 2 dargestellt - b₂ = a = 3mm und t₂ = 1,5mm sowie e = 10mm gewählt.

In den Figuren 4 und 5 ist der Tiefenunterschied zwischen der Rille 10 einschließlich ihres mit größerer Rillenbreite ausgebildeten Erstreckungsabschnitts 11 einerseits und dem Oberflächenkanal 12 - deutlich zu erkennen - dargestellt. Dabei ist zur besseren Überschaubarkeit in Fig.5 lediglich der Schnittkonturverlauf in der Schnittebene dargestellt und die Hintergrundkanten sind weggelassen.

Fig. 2 zeigt ein Ausführungsbeispiel, bei welchem in die verdickten Erstreckungsabschnitte 11 beiderseits der Querrille jeweils ein Oberflächenkanal 12 einmündet.

In anderer - nicht dargestellter Ausführung - ist jeweils zu jeder Rille 10 korrespondierend angeordnet lediglich ein Oberflächenkanal 12 ausgebildet, welcher von einer Seite im axialen Erstreckungsabschnitt 11 der Rille 10 in die Rille 10 einmündet.

Die Profiltiefe P_{T} ist bei Pkw-Reifen mit 5mm ≤ P_{T} ≤ 9mm ausgebildet. Beispielsweise ist die maximale Profiltiefe P_{T} mit P_{T} = 9mm gewählt.

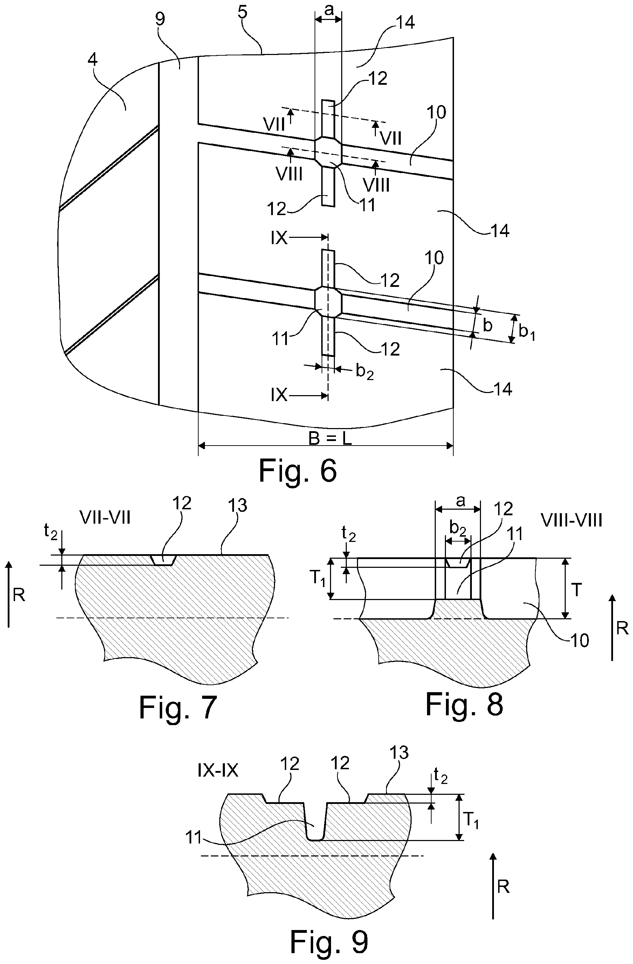

Die Figuren 6 bis 9 zeigen eine alternative Ausbildung des Profilbandes 5, bei welchem das Profilband 5 als Profilblockreihe bekannter Art ausgebildet ist mit in Umfangsrichtung U des Fahrzeugluftreifens hintereinander angeordneten, radial erhabenen Profilblockelementen 14, wobei jeweils zwei in Umfangsrichtung U des Fahrzeugluftreifens benachbarte Profilblockelemente durch eine quer verlaufende Rille 10 voneinander beabstandet sind.

Bei dieser Ausführung sind die Rillen 10 innerhalb der Bodenaufstandsbreite des Fahrzeugluftreifens jeweils über die gesamte Breite B des Profilbandes erstreckt und mit einer in axialer Richtung A des Fahrzeugluftreifens gemessenen Erstreckungslänge L mit L = B ausgebildet. Bei diesem Ausführungsbeispiel ist der Erstreckungsabschnitt 11 innerhalb des in axialer Richtung A gebildeten, mittleren Erstreckungsdrittels der mit Erstreckungslänge L ausgebildeten Rille 10 ausgebildet. In der dargestellten Ausführung ist der Erstreckungsabschnitt 11 genau in der Mitte der mit Erstreckungslänge L ausgebildeten Rille 10 angeordnet. Auch in dieser Ausführung ist in der radial äußeren Oberfläche 13der durch die Rille 10 begrenzten Profilblockelemente 14 jeweils beiderseits der Rille 10 ein Oberflächenkanal 12 der Erstreckungslänge e der Erstreckungsbreite b₂ und der Erstreckungstiefe t₂ ausgebildet. Für die Maße b, b₁, a, t₂ und e gelten die entsprechenden Dimensionierungen wie sie am Ausführungsbeispiel der Figuren 1 bis 5 bereits erläutert wurden.

In den Figuren 6 bis 9 ist darüber hinaus ein weiteres Ausführungsbeispiel dargestellt, bei welchem die Breite b₂ kleiner ausgebildet ist als die Erstreckungslänge a.

In den Figuren 6 bis 9 ist darüber hinaus ein weiteres Ausführungsbeispiel dargestellt, bei welchem innerhalb des mit vergrößerter Rillenbreite b₁ ausgebildeten Erstreckungsabschnittes 11 der die Rille 10 in radialer Richtung R nach innen hin begrenzende Rillengrund gegenüber dem im restlichen Erstreckungsbereich der Rille 10 außerhalb des Erstreckungsabschnittes 11 ausgebildeten Rillengrund radial angehoben ist. Hierdurch ist die Rille 10 im Erstreckungsbereich 11 mit einer ausgehend von der radial äußeren Oberfläche 13 in radialer Richtung R nach innen gemessenen Tiefe T₁ ausgebildet mit T₁ < T. Die Tiefe T₁ ist dabei mit (T/2) ≤ T₁ ≤ (0,75T) gewählt. Beispielsweise ist T₁ = 0,7 T.

Fig. 1 zeigt ein Ausführungsbeispiel, bei dem auch das Schulterband 1 analog zum Schulterband 5 mit entsprechend ausgebildeten Rillen 10' und mit verdickter Rillenbreite ausgebildetem Abschnitt 11 und mit in den Abschnitt 11 einmündenden Oberflächenkanälen 12 ausgebildet ist.

Fig. 1 zeigt in weiterer Ausführung auch die Ausbildung des Profilbandes 2 mit analog zum Profilband 10 ausgebildeten, quer verlaufenden Rillen 10" und mit verdickter Rillenbreite ausgebildetem Abschnitt 11 und mit in den Abschnitt 11 einmündenden Oberflächenkanälen 12 ausgebildet ist.

Dabei ist in Fig. 1 zu erkennen, dass in den Profilbändern 1,2 und 5 jeweils der querrillenfreie Abschnitt f in dem jeweiligen Profilband 1,2 und 5 zwischen den Querrillen 10' bzw. 10"bzw. 10 und der das jeweilige Profilband 1 bzw. 2 bzw. 5 in axialer Richtung zur Mitte des Laufstreifenprofils hin begrenzenden Umfangsrille 6, 7 bzw. 9 hin ausgebildet ist.

Wie in Fig.1 dargestellt ist, sind weitere Profilbänder - hier beispielsweise das Profilband 3 und 4 - in bekannter Weise mit Feineinschnitten versehen.

### Bezugszeichenliste (Teil der Beschreibung)

- 1: Profilband
- 2: Profilband
- 3: Profilband
- 4: Profilband
- 5: Profilband
- 6: Umfangsrille
- 7: Umfangsrille
- 8: Umfangsrille
- 9: Umfangsrille
- 10: Querrille
- 11: Rillenabschnitt
- 12: Oberflächenkanal
- 13: Radial äußere Oberfläche
- 14: Profilblockelement

## Patentansprüche

1. Fahrzeugluftreifen mit einem profilierten Laufstreifen mit durch Umfangsrillen (6,7,8,9) von einander beabstandeten radial erhabenen Profilbändern (1,2,3,4,5), welche nach radial außen von einer die Straßenkontaktfläche bildenden radial äußeren Oberfläche (13) begrenzt werden, wobei in wenigstens einem Profilband (5) der in axialer Richtung A gemessenen Profilbandbreite B quer oder schräg verlaufend angeordnete Rillen (10) mit einer in axialer Richtung A gemessenen Erstreckungslänge L und mit einer Rillentiefe T ausgebildet sind,
wobei die Rillen (10) in einem axialen Erstreckungsabschnitt (11) der Länge a verdickt mit einer in der radial äußeren Oberfläche gemessenen Rillenbreite b₁ und außerhalb dieses Erstreckungsabschnitts (11) mit einer Rillenbreite b mit b₁ > b ausgebildet sind,
**dadurch gekennzeichnet,**
**dass** die Länge a mit 2,0mm≤a<(0,25*L) ausgebildet ist,
**dass** zumindest ein in der radial äußeren Oberfläche (13) des Profilbandes (5) in Umfangsrichtung U des Reifens erstreckter Oberflächenkanal (12) mit einer Erstreckungslänge e, mit einer längs seiner Erstreckung ausgebildeten Tiefe t₂ mit 0,5mm≤ t₂ ≤ 2,5mm und mit einer Breite b₂ mit b₂≤a und mit b₂≤2,5mm ausgebildet ist, der in den verdickten Erstreckungsabschnitt (11) der Rille (10) mündet, **und**
**dass die Erstreckungslänge e des Oberflächenkanals (12) mit (b/2)≤e≤(4b) ausgebildet ist.**

2. Fahrzeugluftreifen gemäß den Merkmalen von Anspruch 1,
wobei die Erstreckungslänge L mit (1/3)B ≤L≤B ausgebildet ist.

3. Fahrzeugluftreifen gemäß den Merkmalen von Anspruch 1 oder 2,
wobei die Breite b₂ mit 1mm≤b₂ ausgebildet ist.

4. Fahrzeugluftreifen gemäß den Merkmalen von einem oder mehreren der vorangegangenen Ansprüche,
wobei die Rillenbreite b mit 3mm≤b≤6mm ausgebildet ist.

5. Fahrzeugluftreifen gemäß den Merkmalen von einem oder mehreren der vorangegangenen Ansprüche,
wobei die Rillenbreite b₁ mit (6/5)b≤ b₁≤2b ausgebildet ist.

6. Fahrzeugluftreifen gemäß den Merkmalen von einem oder mehreren der vorangegangenen Ansprüche,
wobei die Rillentiefe T mit 5mm≤T≤P_{T} ausgebildet ist, wobei die maximale Profiltiefe P_{T} ist.

7. Fahrzeugluftreifen gemäß den Merkmalen von einem oder mehreren der vorangegangenen Ansprüche,
wobei die Rille (10) längs der axialen Erstreckungsabschnitt der Verdickung der Länge a mit einer Tiefe T₁ ausgebildet ist mit (T/2)≤ T₁≤(0,75T).

8. Fahrzeugluftreifen gemäß den Merkmalen von einem oder mehreren der vorangegangenen Ansprüche,
wobei der axiale Erstreckungsabschnitt (11) der Verdickung der Länge a an einem Erstreckungsende der Rille (10) ausgebildet ist.

9. Fahrzeugluftreifen gemäß den Merkmalen von einem oder mehreren der Ansprüche 1 bis 7,
wobei der axiale Erstreckungsabschnitt (11) der Verdickung der Länge a im mittleren Erstreckungsdrittel der Rille (10) ausgebildet ist.

## Claims

1. Pneumatic vehicle tyre having a profiled tread with radially raised profile bands (1, 2, 3, 4, 5) that are spaced apart from one another by circumferential grooves (6, 7, 8, 9) and are delimited radially on the outside by a radially outer surface (13) forming the road contact surface, wherein grooves (10) that are arranged in a manner extending transversely or obliquely and have an extension length L, measured in the axial direction A, and a groove depth T are formed in at least one profile band (5) of profile-band width B, measured in the axial direction A, wherein the grooves (10) are formed, in an axial extension portion (11) of length a, in a thickened manner with a groove width b₁, measured in the radially outer surface, and, outside this extension portion (11), with a groove width b, where b₁ > b, **characterized**
**in that** the length a is formed with 2.0 mm≤a≤(0.25*L),
**in that** at least one surface channel (12) that extends in the radially outer surface (13) of the profile band (5) in the circumferential direction U of the tyre is formed with an extension length e, a depth t₂ formed along its extension, where 0.5 mm≤t₂≤2.5 mm, and a width b₂, where b₂≤a and b₂≤2.5 mm, said surface channel (12) leading into the thickened extension portion (11) of the groove (10), and
**in that** the extension length e of the surface channel (12) is formed with (b/2)≤e≤(4b).

2. Pneumatic vehicle tyre according to the features of Claim 1,
wherein the extension length L is formed with (1/3)B≤L≤B.

3. Pneumatic vehicle tyre according to the features of Claim 1 or 2,
wherein the width b₂ is formed with 1 mm≤b₂.

4. Pneumatic vehicle tyre according to the features of one or more of the preceding claims,
wherein the groove width b is formed with 3 mm≤b≤6 mm.

5. Pneumatic vehicle tyre according to the features of one or more of the preceding claims,
wherein the groove width b₁ is formed with (6/5)b≤b₁≤2b.

6. Pneumatic vehicle tyre according to the features of one or more of the preceding claims,
wherein the groove depth T is formed with 5 mm≤T≤P_{T}, wherein the maximum profile depth is P_{T}.

7. Pneumatic vehicle tyre according to the features of one or more of the preceding claims,
wherein the groove (10) is formed with a depth T₁ along the axial extension portion of the thickened portion of length a, wherein (T/2)≤T₁≤(0.75T).

8. Pneumatic vehicle tyre according to the features of one or more of the preceding claims,
wherein the axial extension portion (11) of the thickened portion of length a is formed at an extension end of the groove (10).

9. Pneumatic vehicle tyre according to the features of one or more of Claims 1 to 7,
wherein the axial extension portion (11) of the thickened portion of length a is formed in the middle extension third of the groove (10).

## Revendications

1. Pneumatique de véhicule comprenant une bande de roulement profilée avec des bandes profilées rehaussées radialement (1, 2, 3, 4, 5) espacées les unes des autres par des rainures périphériques (6, 7, 8, 9), qui sont limitées radialement vers l'extérieur par une surface radialement extérieure (13) formant la surface de contact avec la route, des rainures (10) disposées de manière à s'étendre transversalement ou obliquement, avec une longueur d'étendue L mesurée dans la direction axiale A et avec une profondeur de rainure T étant réalisées dans au moins une bande profilée (5) de largeur de bande profilée B mesurée dans la direction axiale A, les rainures (10), dans une portion d'étendue axiale (11) de longueur a, étant réalisées sous forme épaissie avec une largeur de rainure b₁ mesurée dans la surface radialement extérieure et, à l'extérieur de cette portion d'étendue (11), avec une largeur de rainure b avec b₁ > b, **caractérisé en ce que**
la longueur a est réalisée avec 2,0 mm ≤ a ≤ (0,25*L),
**en ce qu'**au moins un canal de surface (12) s'étendant dans la surface radialement extérieure (13) de la bande profilée (5) dans la direction périphérique U du pneu, de longueur d'étendue e, est réalisé avec une profondeur t₂ réalisée le long de son étendue, avec 0,5 mm ≤ t₂ ≤ 2,5 mm et avec une largeur b₂ avec b₂ ≤ a et avec b₂ ≤ 2,5 mm, lequel débouche dans la portion d'étendue épaissie (11) de la rainure (10), et
**en ce que** la longueur d'étendue e du canal de surface (12) est réalisée avec (b/2) ≤ e ≤ (4b).

2. Pneumatique de véhicule selon les caractéristiques de la revendication 1, dans lequel la longueur d'étendue L est réalisée avec (1/3)B ≤ L ≤ B.

3. Pneumatique de véhicule selon les caractéristiques de la revendication 1 ou 2, dans lequel la largeur b₂ est réalisée avec 1 mm ≤ b₂.

4. Pneumatique de véhicule selon les caractéristiques d'une ou plusieurs des revendications précédentes, dans lequel la largeur de rainure b est réalisée avec 3 mm ≤ b ≤ 6 mm.

5. Pneumatique de véhicule selon les caractéristiques d'une ou plusieurs des revendications précédentes, dans lequel la largeur de rainure b₁ est réalisée avec (6/5)b ≤ b₁ ≤ 2b.

6. Pneumatique de véhicule selon les caractéristiques d'une ou plusieurs des revendications précédentes, dans lequel la profondeur de rainure T est réalisée avec 5 mm ≤ T ≤ P_{T}, P_{T} étant la profondeur de profilé maximale.

7. Pneumatique de véhicule selon les caractéristiques d'une ou plusieurs des revendications précédentes, dans lequel la rainure (10) le long de la portion d'étendue axiale de l'épaississement de longueur a est réalisée avec une profondeur T₁ avec (T/2) ≤ T₁ ≤ (0,75T).

8. Pneumatique de véhicule selon les caractéristiques d'une ou plusieurs des revendications précédentes, dans lequel la portion d'étendue axiale (11) de l'épaississement de longueur a est réalisée au niveau d'une extrémité d'étendue de la rainure (10) .

9. Pneumatique de véhicule selon les caractéristiques d'une ou plusieurs des revendications 1 à 7, dans lequel la portion d'étendue axiale (11) de l'épaississement de longueur a est réalisée dans le tiers central de l'étendue de la rainure (10).
